(19) Europäisches Patentamt / European Patent Office / Office européen des brevets

(11) **EP 3 348 922 B1**

(12) **FASCICULE DE BREVET EUROPEEN**

(45) Date de publication et mention de la délivrance du brevet:
**10.07.2019 Bulletin 2019/28**

(51) Int Cl.:
*F24F 7/06* *(2006.01)*    *F24F 11/00* *(2018.01)*

(21) Numéro de dépôt: **17204753.2**

(22) Date de dépôt: **30.11.2017**

(54) **PROCÉDÉ DE RÉGULATION DE LA VITESSE DE ROTATION D'UN VENTILATEUR D'EXTRACTION D'AIR VICIÉ**

ABLUFTGEBLÄSESTEUERUNG

CONTROL OF THE ROTATIONAL SPEED OF AN EXTRACTION BLOWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.01.2017 FR 1750243**

(43) Date de publication de la demande:
**18.07.2018 Bulletin 2018/29**

(73) Titulaire: **VTI**
**34110 Frontignan (FR)**

(72) Inventeur: **MONDINA, Sylvain**
**34830 JACOU (FR)**

(74) Mandataire: **Cabinet BARRE LAFORGUE & associés**
**35, rue Lancefoc**
**31000 Toulouse (FR)**

(56) Documents cités:
**EP-A1- 2 444 748    FR-A1- 2 513 359**
**FR-A1- 2 884 904    FR-A1- 2 969 255**

**Description**

L'invention concerne un procédé de régulation de la vitesse de rotation d'un ventilateur d'extraction d'air vicié d'une installation comportant une pluralité de bouches d'extraction reliées à un collecteur commun par des conduites.

Les immeubles d'habitation comportant de nombreux logements sont dotés d'installation de ventilation visant à extraire l'air vicié (air humide des salles d'eau et des cuisines, etc.) des logements et à le remplacer par de l'air frais. Ces installations comportent en général une ou plusieurs bouches d'extraction de l'air vicié par logement, en général placées dans les pièces dites humides comme les salles de bain, les cuisines, les toilettes, etc. Ces bouches d'extraction sont reliées à un réseau de conduites, en général en arborescence, se terminant par un ventilateur d'extraction, le cas échéant abrité dans un caisson et évacuant l'air vicié à l'extérieur. Les bouches d'extraction peuvent être de plusieurs types, chacun présentant des caractéristiques techniques particulières en termes de débit en fonction de la différence de pression entre l'intérieur du logement et la conduite d'évacuation à laquelle la bouche est reliée. Par exemple, une bouche d'extraction du type "manuel" présente pour une différence de pression donnée deux débits, un débit minimum si la bouche est fermée et un débit maximum lorsqu'elle est ouverte, l'ouverture pouvant être temporisée, une bouche d'extraction du type "auto-réglable" présente un débit sensiblement constant sur une large étendue de différences de pression, une bouche "hygro-réglable" présente, pour une même différence de pression, un débit variable en fonction du taux d'hygrométrie de l'air qui la traverse, etc.

Les règles de construction applicables aux installations de ventilation, par exemple en France, la Réglementation Thermique 2012 (RT2012) et la norme NF DTU 68-3 P1-1-1, exigent un débit minimum pour chaque type de bouche, quelles que soient les conditions des autres bouches de l'installation. Il convient donc de réguler au moins un paramètre de l'installation en vue d'assurer la conformité aux normes. Par exemple, en vue de la régulation du débit d'air vicié extrait de l'installation, on connait du document FR 2513359 un procédé de régulation de la perte de charge des conduits de l'installation au moyen d'un volet mobile afin de permettre une augmentation de la dépression dans l'installation même en cas d'augmentation du débit. Un tel procédé n'est pas économe du fait de la déperdition d'énergie autour de la perte de charge supplémentaire représentée par le volet mobile.

Il est également connu de réguler la vitesse de rotation du ventilateur d'extraction de manière à assurer un débit d'air global de l'installation conforme à une courbe débit / pression préprogrammée, représentative d'une estimation statistique de l'état des différentes bouches d'extraction de l'installation.

Cependant une telle régulation n'est pas très précise et peut conduire à ne pas permettre d'atteindre le débit minimal requis pour certaines bouches dans certaines configurations de l'installation (dépendant du nombre de bouches ouvertes et de leur débit instantané) sauf à prendre des marges de sécurité importantes. Dans ce cas, l'énergie supplémentaire consommée tant par l'installation (consommation du ventilateur fonctionnant au-delà du point de fonctionnement optimal) que par le bâtiment lui-même (par excès de circulation d'air dans les logements entrainant une déperdition de chaleur) est un inconvénient important.

FR 2969255 décrit un procédé de paramétrage d'une installation de ventilation comprenant un réseau de ventilation d'un local, un ventilateur, et un capteur d'un paramètre du flux d'air de ventilation au niveau d'un débouché de ventilation. Le régime considéré comme nominal du ventilateur est fonction de la valeur du régime atteint, par modification de la consigne du ventilateur, pour une valeur cible prédéterminée du paramètre du flux d'air de ventilation au niveau du débouché. L'installateur doit alors passer de bouche en bouche pour identifier celle qui, dans une configuration donnée, est la bouche la plus défavorisée, c'est-à-dire celle qui nécessite le régime du ventilateur le plus élevé pour obtenir une pression au niveau de cette bouche qui soit égale à la valeur de seuil prédéterminée permettant à la bouche de fonctionner correctement. Pendant la phase de paramétrage, il est considéré que les pertes de charge n'évoluent pas dans le réseau d'extraction. En conséquence, là encore, ce procédé de paramétrage n'est pas suffisamment précis et présente les mêmes inconvénients que ceux mentionnés ci-dessus.

Il subsiste donc un besoin pour un procédé de régulation de l'extraction d'air vicié d'un bâtiment comportant plusieurs logements qui soit économe et permette d'assurer la conformité aux normes sans nécessiter des marges de sécurité excessives.

L'invention a donc pour but un procédé de régulation de la vitesse de rotation d'un ventilateur d'extraction d'air vicié d'une telle installation qui ne présente pas les inconvénients de la technique antérieure.

L'invention a également pour but un tel procédé qui soit facile à mettre en oeuvre, tout en permettant une précision améliorée de la régulation.

Dans le présent texte, on utilise les termes amont et aval relativement au sens du flux d'air dans la conduite considérée. De même, le terme "pression" doit être interprété dans son sens relatif, c'est-à-dire qu'un ventilateur d'extraction génère une pression négative (dépression) par rapport à la pression atmosphérique. Cependant, par simplification, on emploie ce terme au sens de la valeur absolue de la pression ainsi générée.

Afin d'atteindre ces buts, l'invention concerne un procédé de régulation de la vitesse de rotation d'un ventilateur d'extraction d'air vicié d'une installation comportant une pluralité de bouches d'extraction reliées à un collecteur commun par des conduites, dans lequel :

- dans une étape initiale,

    - on détermine, à partir de données représentatives de l'installation, un premier débit de l'installation et on calcule, à ce premier débit, une perte de charge, dite perte de charge théorique, entre chaque bouche d'extraction et le ventilateur,
    - on détermine une bouche d'extraction, dite bouche la plus défavorisée, présentant la perte de charge théorique maximum, et
    - on calcule un coefficient de perte de charge de l'installation entre la bouche la plus défavorisée et le ventilateur à partir des données de section du collecteur,
    - on détermine pour au moins deux autres débits étagés dans une plage de débits de l'installation, un coefficient de perte de charge entre ladite bouche la plus défavorisée et le ventilateur,

- dans une deuxième étape, à chaque instant,

    - on estime un débit mesuré de l'installation,
    - on calcule une pression, dite pression calculée, au droit de la bouche la plus défavorisée à partir du débit mesuré et des coefficients de perte de charge de l'installation, et
    - on régule la vitesse de rotation du ventilateur en fonction d'un écart entre la pression calculée et une pression de consigne.

L'étape initiale de ce procédé, qui n'est exécutée qu'une fois au moment du calcul de l'installation, utilise les données caractéristiques de celle-ci, tels que les caractéristiques de débit/pression des bouches installées, les caractéristiques linéiques de perte de charge des conduites, les pertes de charges des singularités (coudes, rétrécissements, etc.) pour déterminer un premier débit global de l'installation par exemple dans un des cas de fonctionnement requis par les normes pour le dimensionnement de l'installation. Pour ce premier débit, la perte de charge théorique entre chaque bouche d'extraction et le ventilateur est calculée de manière à déterminer la bouche d'extraction la plus défavorisée, c'est-à-dire celle qui présente la perte de charge maximum entre la bouche d'extraction et le ventilateur. Une fois la bouche d'extraction la plus défavorisée identifiée, on détermine pour ce premier débit, un coefficient de perte de charge entre la bouche la plus défavorisée et le ventilateur, ramené au débit qui traverse la section du collecteur la plus proche du ventilateur. On recommence cette détermination d'un coefficient de perte de charge pour plusieurs débits couvrant la gamme de débits de l'installation. Ces coefficients de perte de charge permettent ainsi de décrire par interpolation en fonction d'un débit mesuré le comportement de l'installation et en particulier la perte de charge entre le ventilateur et la bouche la plus défavorisée. Il est alors possible de commander la vitesse de rotation du ventilateur en fonction de la pression au droit de la bouche la plus défavorisée de manière à garantir un débit minimum au travers de cette bouche.

Selon un mode de réalisation préférentiel de l'invention, le premier débit est un débit maximum foisonné de l'installation obtenu à partir de la structure de celle-ci, du nombre et des caractéristiques des bouches d'extraction installées. Le débit maximum foisonné est défini dans les normes (par exemple au paragraphe 5.1.8 de la norme NF DTU 68-3 P1-1-1) comme un débit maximum d'une installation considérant que toutes les bouches d'extraction ne sont pas toutes ouvertes simultanément au débit maximum. Il a été constaté que la détermination de la bouche la plus défavorisée est plus fiable à ce débit.

Avantageusement et selon l'invention, un deuxième débit est un débit minimum de l'installation. L'utilisation du débit minimum de l'installation, obtenu en faisant la somme des débits minimums de toutes les bouches d'extraction de l'installation permet ainsi de définir un coefficient de perte de charge de l'installation au débit minimum pratique de celle-ci.

Avantageusement et selon l'invention, un troisième débit est un débit médian de l'installation, obtenu à partir de la somme des débits médians traversant les bouches, chaque débit médian étant une moyenne du débit individuel de chaque bouche dans les conditions du premier débit et du débit individuel de chaque bouche dans les conditions du deuxième débit. Ce troisième débit permet de calculer un coefficient de perte de charge de l'installation représentatif de la perte de charge médiane de l'installation, toutes les bouches d'extraction fonctionnant simultanément à leur débit médian.

Avantageusement et selon l'invention, dans une installation comportant plusieurs conduits principaux connectés au ventilateur, on utilise un quatrième débit, dit débit contraignant, de l'installation, obtenu à partir de la somme des débits minimaux de toutes les conduits principaux de l'installation à l'exception de celui dans lequel est située la bouche la plus défavorisée, et du débit maximum foisonné du conduit principal dans lequel est située la bouche la plus défavorisée. Ce débit contraignant est représentatif du « cas pire » pouvant se présenter dans l'installation par rapport à la perte de charge calculée entre le ventilateur et la bouche la plus défavorisée.

Avantageusement et selon l'invention, pour chaque débit, on calcule un coefficient $\zeta$ de perte de charge de l'installation à partir de l'équation :

$$\zeta = \frac{2\Delta P}{\rho \left(\frac{Q}{S}\right)^2}$$

où :

- ΔP est la perte de charge entre la bouche la plus défavorisée et le ventilateur, pour le débit considéré,
- ρ est une valeur normalisée de la masse volumique de l'air,
- Q est le débit considéré,
- S est la section équivalente d'un collecteur immédiatement en amont du ventilateur.

Ainsi, à partir de chacun des quatre débits précédemment cités, on calcule un coefficient de perte de charge de l'installation pour chacun des débits permettant d'estimer le comportement de l'installation, et en particulier la perte de charge entre la bouche la plus défavorisée et le ventilateur pour un débit quelconque compris dans la plage de débits définie par le débit minimum et le débit maximum foisonné. Afin de simplifier les calculs, la valeur normalisée de la masse volumique de l'air est prise égale à 1,2 kg/m³ comme précisé dans l'annexe A1 de la norme NF DTU 68-3 P1-1-1 précédemment citée. De plus, l'équation ci-dessus utilise le carré de la vitesse de l'air. Pour normaliser cette valeur de vitesse à partir du débit considéré dans l'installation, on ramène la valeur du débit considéré à la section équivalente d'un collecteur en amont du ventilateur. Cette section équivalente peut être la section réelle d'un collecteur unique amenant l'air vicié au ventilateur ou bien la somme des sections d'une pluralité de collecteurs reliés à un caisson contenant le ventilateur.

Avantageusement et selon l'invention, on détermine un coefficient de perte de charge supplémentaire, dit coefficient de perte de charge moyen, obtenu à partir d'une moyenne des coefficients de perte de charge calculés à partir des trois premiers débits. Les coefficients de perte de charge calculée pour les trois premiers débits, c'est-à-dire le débit minimum, le débit médian et le débit maximum foisonné sont des coefficients très proches puisque l'évolution des débits est homogène en tous points du réseau. On peut ainsi regrouper ces trois coefficients de perte de charge en un coefficient de perte de charge moyen unique représentatif d'un débit homogène dans toute l'installation.

Avantageusement et selon l'invention, on détermine un coefficient de perte de charge supplémentaire, dit coefficient de perte de charge réaliste, obtenu à partir d'une moyenne du coefficient de perte de charge moyen et du coefficient de perte de charge contraignant. Ce coefficient de perte de charge réaliste est représentatif du comportement de l'installation dans une plage de débits moyens, entre le débit minimum et le débit maximum, sans pour autant se limiter à des débits homogènes dans toute l'installation.

Avantageusement et selon l'invention, on estime à chaque instant un débit actuel de l'installation, dit débit mesuré, à partir de la vitesse de rotation du ventilateur et de la mesure d'une pression générée par le ventilateur. Alternativement ou en combinaison, à chaque instant, on estime un débit actuel de l'installation, dit débit mesuré, à partir de la vitesse du flux d'air en amont du ventilateur et de la section du collecteur. Ainsi, de nombreux moyens peuvent être utilisés pour déterminer le débit de l'installation. Par exemple, on peut déduire des abaques d'un ventilateur le débit qui le traverse en fonction de sa vitesse de rotation et de la puissance électrique qu'il consomme. On peut également obtenir le débit qui traverse un ventilateur en mesurant la vitesse de l'air en amont du ventilateur au moyen d'un anémomètre et en effectuant le produit de cette vitesse par la section du collecteur dans lequel cette vitesse a été mesurée. Bien entendu d'autres moyens de mesure sont possibles, par exemple au moyen d'un organe déprimogène, en mesurant une perte de charge aux bornes d'une restriction connue traversée par une fraction du débit à mesurer ou encore au moyen d'un débitmètre, par exemple un débitmètre à fil chaud, etc.

Avantageusement et selon l'invention, on détermine, pour le débit mesuré, une perte de charge entre le ventilateur et la bouche la plus défavorisée à partir des coefficients de perte de charge préalablement calculés. Une telle détermination de la perte de charge entre le ventilateur et la bouche la plus défavorisée peut être réalisée de nombreuses manières, par exemple par interpolation entre les pertes de charge obtenues pour le débit mesuré à partir des coefficients de perte de charge de l'installation calculés pour les deux débits les plus proches du débit mesuré. Un autre mode de détermination de la perte de charge entre le ventilateur à la bouche la plus défavorisée peut être réalisé par un calcul pondéré entre les pertes de charge obtenues pour le débit mesuré à partir de tous les coefficients de perte de charge de l'installation, pondéré par la différence entre le débit mesuré et les débits pour lesquels ces coefficients de perte de charge ont été calculés.

Dans un mode de réalisation préférentielle de l'invention, on définit une pluralité de plages de débit, on affecte à chaque plage de débit un coefficient de perte de charge adapté à cette plage de débit et on calcule la perte de charge entre le ventilateur et la bouche la plus défavorisée en fonction des plages de débit comprises entre le débit minimum et le débit mesuré. En l'occurrence, on détermine quatre plages de débit, une première plage comprise entre un débit nul et le débit minimum de l'installation à laquelle on affecte le coefficient de perte de charge calculée pour le débit minimum, une deuxième plage comprise entre le débit minimum et un débit, dit débit 1/3, correspondant à un tiers de la différence entre le débit minimum et le débit maximum, à laquelle on affecte le coefficient de perte de charge contraignant, une troisième plage comprise entre le débit 1/3 et un débit, dit débit 2/3, correspondant à deux tiers de la différence entre le débit minimum et le débit maximum à laquelle on affecte le coefficient de perte de charge réaliste et une quatrième plage comprise entre le débit 2/3 et le débit maximum, à laquelle on affecte le coefficient de perte de charge moyen. On calcule alors la perte de charge entre la bouche la plus défavorisée et le ventilateur au moyen d'un calcul par tranche évitant une discontinuité de la perte de charge calculée par valeur supérieure et inférieure autour des bornes de chaque plage.

Selon un mode de réalisation préférentielle de l'invention, on détermine la pression calculée à partir de la perte de charge entre le ventilateur et la bouche la plus défavorisée, on compare la pression calculée avec une pression de consigne et on incrémente la vitesse de rotation du ventilateur si la pression calculée est inférieure à la pression de consigne ou on décrémente la vitesse de rotation du ventilateur si la pression calculée est supérieure à la pression de consigne. La pression calculée, c'est-à-dire la pression régnant dans l'installation de ventilation à l'extérieur du logement desservi par la bouche la plus défavorisée, en regard de cette bouche peut être déterminée en retranchant la perte de charge entre le ventilateur et la bouche la plus défavorisée à la pression régnant immédiatement en amont du ventilateur. On régule alors la vitesse de rotation du ventilateur de manière à ce que la pression calculée soit sensiblement égale à la pression de consigne.

Selon une caractéristique avantageuse de l'invention, la pression de consigne est déterminée en fonction de la différence de pression minimum aux bornes de la bouche la plus défavorisée et de la dépression régnant dans un logement desservi par la bouche la plus défavorisée. De cette manière, on s'assure que la différence de pression entre l'intérieur du logement desservi par la bouche la plus défavorisée et le conduit d'aspiration, immédiatement en regard de cette bouche, est au moins égale à la différence de pression permettant d'assurer le débit minimum d'extraction de la bouche la plus défavorisée.

Selon une autre caractéristique avantageuse de l'invention, on encadre la pression de consigne par deux limites de pression et la vitesse de rotation du ventilateur reste inchangée à l'intérieur de ces limites. Grâce à la bande morte réalisée par les deux limites de pression, on minimise les variations de vitesse de rotation du ventilateur.

L'invention concerne également un procédé de régulation d'un ventilateur d'extraction caractérisé en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :

- la figure 1 représente un schéma d'un exemple d'une installation de ventilation d'un immeuble collectif, installation à laquelle le procédé selon l'invention s'applique.
- la figure 2 est un graphe représentatif des pertes de charges entre le ventilateur et la bouche la plus défavorisée en fonction du débit, utile à la compréhension du procédé selon l'invention.

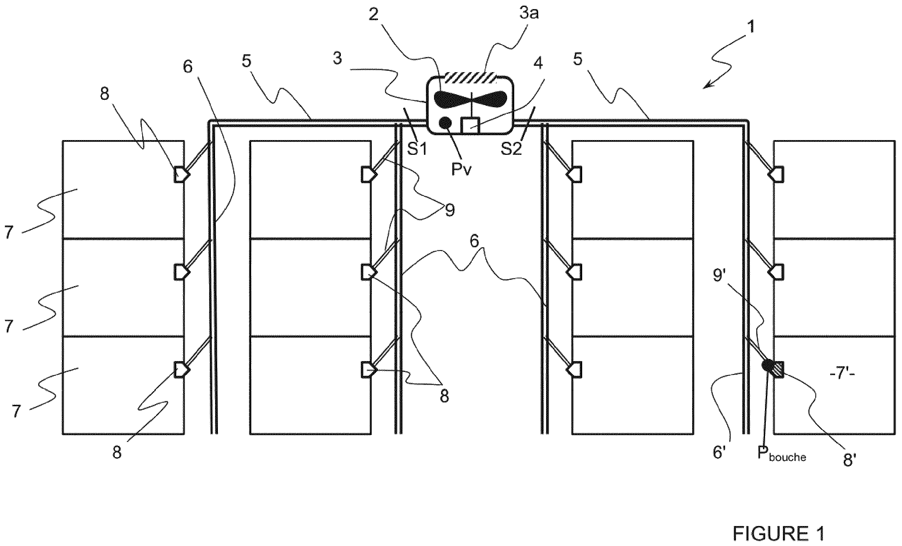

La figure 1 représente un schéma d'une installation 1 de ventilation d'un immeuble collectif comportant un ventilateur 2 d'extraction d'air vicié, par exemple fixé sur le toit de l'immeuble. Le ventilateur 2, placé dans un caisson 3, est entraîné par un moteur 4 électrique. Deux collecteurs 5 débouchent dans le caisson 3 en amont du ventilateur 2 par des sections respectives SI et S2. L'air vicié aspiré par le ventilateur 2 est évacué à l'extérieur du caisson 3 par une grille d'évacuation 3a. Des conduits principaux, encore appelés colonnes 6, sont raccordés aux collecteurs 5 s'étendent verticalement sur toute la hauteur de l'immeuble et desservent une pluralité de logements 7. Les logements 7 comportent au moins une bouche d'extraction 8 reliée à la colonne 6 par un conduit de raccordement 9.

Dans une telle installation, on détermine un débit maximum d'extraction de l'installation en faisant la somme des débits maximum de chacune des bouches d'extraction 8 de l'installation. Dans le cas où certaines des bouches d'extraction 8 sont du type hygro-réglable ou à ouverture temporisée, on applique une méthode de pondération, dite foisonnement, précisée par les normes. En particulier, en présence de bouches d'extraction à variation automatique de débit, le foisonnement désigne le fait que les variations de débit qui en découlent sont statistiquement réduites lorsque ces débits sont repris dans un même réseau. Le foisonnement des débits s'effectue colonne par colonne afin de dimensionner les réseaux collectifs et/ou les ventilateurs à une valeur réaliste et non maximum.

En l'occurrence, on considère pour chacune des bouches d'extraction à variation automatique un débit foisonné obtenu à partir de la combinaison linéaire d'un débit maximum de la bouche pondéré par un coefficient k et d'un débit minimum pondéré par un coefficient (1-k), le coefficient k variant en fonction du nombre de bouches à variation automatique de la colonne considérée.

On calcule ainsi un débit maximum foisonné QMaxF pour l'ensemble de l'installation en faisant la somme des débits maximum foisonnés de chacune des bouches de l'installation. On utilise également ces données représentatives de l'installation pour calculer une perte de charge théorique entre chaque bouche d'extraction et le ventilateur. Ce calcul de perte de charge, connu en soi, s'effectue en additionnant les pertes de charges calculées pour chaque débit dans chaque tronçon de l'installation, à partir de la bouche d'extraction 8 considérée jusqu'au ventilateur 2. Par exemple, on additionne la perte de charge linéique dans le conduit de raccordement 9 sous le débit d'air de la bouche d'extraction 8 considérée, la perte de charge liée à la singularité du raccordement du conduit de raccordement 9 dans la colonne 6, la perte de charge linéique dans le tronçon de la colonne 6 entre les raccordements de deux conduits de raccordement successifs sous le débit d'air cumulé de toutes les bouches d'extraction situées en aval de ce tronçon, etc.

À partir de ce calcul de perte de charge effectué pour chacune des bouches d'extraction 8 de l'installation, on détermine la bouche d'extraction, dite bouche la plus défavorisée 8', qui présente la perte de charge théorique maximum entre elle-même et le ventilateur. Cette perte de charge est notée ΔP'Max.

Dans la suite du texte, on affecte les repères liés à la bouche la plus défavorisée du signe diacritique « prime ». Ainsi, le logement relié à la bouche la plus défavorisée est noté 7', la colonne à laquelle est reliée la bouche la plus défavorisée est notée 6', etc.

On calcule alors un coefficient de perte de charge de l'installation $\zeta$Max à partir de la perte de charge théorique maximum ΔP'Max de la bouche la plus défavorisée 8' et du débit maximum foisonné QMaxF ramené aux données de section du collecteur. Ainsi, dans l'exemple de la figure 1, le débit maximum foisonné QMaxF est ramené à la somme des sections S1 et S2 des deux collecteurs 5 raccordés au caisson 3 du ventilateur pour calculer un coefficient de perte de charge $\zeta$Max au moyen de l'équation suivante :

$$\zeta Max = \frac{2\Delta P\prime Max}{\rho \left(\frac{QMaxF}{S1+S2}\right)^2} \quad (1)$$

où $\rho$ est la masse volumique de l'air fixée par convention à 1,2 kg / m$^3$, les autres termes de l'équation étant définis au-dessus.

Le coefficient de perte de charge $\zeta$Max permet ainsi de décrire une variation de perte de charge entre la bouche la plus défavorisée 8' et le ventilateur au voisinage du débit pour lequel il a été calculé. Cette variation de perte de charge en fonction du débit prend la forme d'une parabole d'axe confondu avec l'axe des pertes de charges, dont le coefficient du second degré est $\zeta$Max et dont la valeur minimale est l'origine des axes : ΔP = 0 et Q =0.

Bien entendu, la variation de perte de charge décrite par le coefficient $\zeta$Max n'étant valable au voisinage du débit pour lequel il a été calculé, d'autres coefficients de perte de charge doivent être calculés avec d'autres débits pour pouvoir couvrir l'étendue de la plage de débits de l'installation.

On choisit ainsi un débit minimum Qmin, correspondant à la somme des débits minimums de chacune des bouches 8 de l'installation et on calcule dans ces conditions de débit une perte de charge théorique minimale ΔP'min entre la bouche la plus défavorisée 8' et le ventilateur 2. On utilise pour ce faire la bouche la plus défavorisée déterminée au cours de l'étape précédente, avec le débit maximum foisonné. Il n'est donc pas nécessaire de recalculer les pertes de charges théoriques entre chacune des bouches 8 et le ventilateur. Il suffit de refaire ce calcul de perte de charge théorique entre la bouche la plus défavorisée et le ventilateur.

On détermine alors un coefficient de perte de charge minimum $\zeta$min en utilisant une équation similaire à l'équation (1) :

$$\zeta min = \frac{2\Delta P\prime min}{\rho \left(\frac{Qmin}{S1 + S2}\right)^2}$$

On procède de même pour déterminer un coefficient de perte de charge médian $\zeta$med pour un débit médian de l'installation obtenu à partir de la somme des débits médians de chacune des bouches de l'installation, le débit médian étant défini comme la moyenne du débit minimum et du débit maximum foisonné de chacune des bouches.

Les inventeurs ont constaté que les trois coefficients de perte de charge calculés précédemment étaient représentatifs d'un comportement de l'installation en présence d'un débit homogène dans les différents conduits et de ce fait, très proches les uns des autres. Dès lors, et pour des simplifications de calcul, on utilise un coefficient de perte de charge moyen $\zeta$moy obtenu à partir de la moyenne des trois coefficients de perte de charge $\zeta$min, $\zeta$med et $\zeta$MaxF.

Afin de rendre compte d'un cas extrême très contraignant dans lequel l'homogénéité du débit dans les différentes colonnes n'est pas respectée, un autre coefficient de perte de charge, dit coefficient de perte de charge contraignant $\zeta$cont, est calculé dans des conditions de débit particulières dans lesquels le débit de toutes les colonnes 6 est minimum à l'exception du débit de la colonne 6' à laquelle est raccordée la bouche la plus défavorisée 8' qui est, lui, fixé au débit maximum. Cette configuration, dans laquelle le débit total extrait par le ventilateur est assez faible alors que la perte de charge de la bouche la plus défavorisée est importante, est une configuration très contraignante dans laquelle les pressions au droit de toutes les bouches d'extraction 8 sont toujours au-dessus de leur pression minimale de fonctionnement, et très fréquemment largement supérieures à cette pression minimale. Ce cas extrême contraignant ne peut se produire que pour des débits totaux au niveau du ventilateur 2 relativement faibles.

Dès lors que le débit au niveau du ventilateur augmente au-delà des conditions de débit particulières du cas contraignant, la perte de charge $\Delta P'$ entre la bouche la plus défavorisée 8' et le ventilateur 2 devient plus régulière et le comportement de l'installation dans ces conditions peut être mieux décrit par un coefficient de perte de charge, dit coefficient de perte de charge réaliste $\zeta real$, obtenu en faisant la moyenne du coefficient de perte de charge contraignant $\zeta cont$ et du coefficient de perte de charge moyen $\zeta moy$.

Afin de partitionner régulièrement l'étendue du débit total de l'installation, on définit quatre plages de débit Q, une première plage comprise entre un débit nul et le débit minimum de l'installation, une deuxième plage comprise entre le débit minimum et un débit, dit débit 1/3, correspondant à un tiers de la différence entre le débit minimum et le débit maximum, une troisième plage comprise entre le débit 1/3 et un débit, dit débit 2/3 correspondant à deux tiers de la différence entre le débit minimum et le débit maximum et une quatrième plage entre le débit 2/3 et le débit maximum. Dans ces plages, les courbes descriptives de la perte de charge $\Delta P'$ entre la bouche la plus défavorisée et le ventilateur sont des paraboles dont le coefficient du second degré est respectivement $\zeta min$, $\zeta cont$, $\zeta real$ et $\zeta moy$ selon le tableau ci-dessous.

| Q | $0 \rightarrow Qmin$ | $Qmin \rightarrow Q1/3$ | $Q1/3 \rightarrow Q2/3$ | $Q2/3 \rightarrow QMaxF$ |
|---|---|---|---|---|
| $\zeta$ | $\zeta min$ | $\zeta cont$ | $\zeta real$ | $\zeta moy$ |

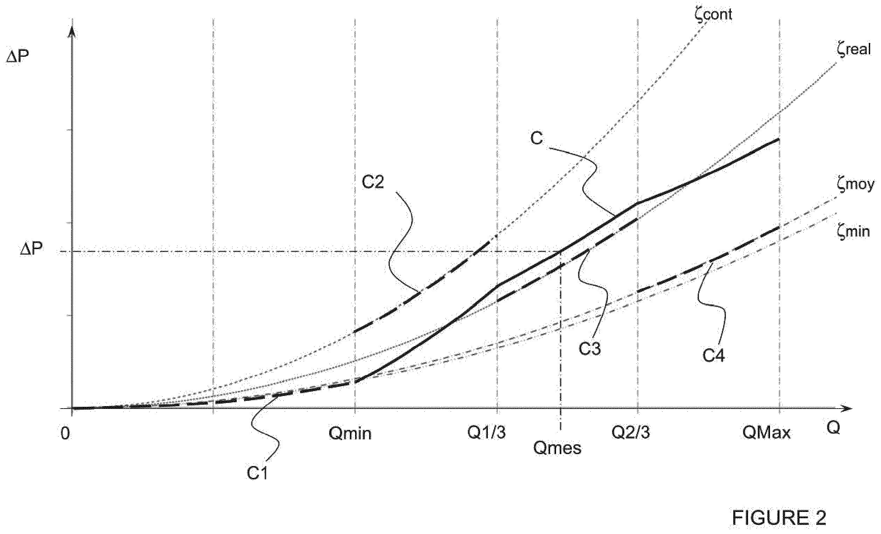

On se réfère à la figure 2 sur laquelle on a représenté sur un graphique les courbes descriptives de la perte de charge $\Delta P'$ et les plages de débit auxquelles elles s'appliquent. On a représenté en traits fins les quatre paraboles correspondant aux quatre coefficients de perte de charge $\zeta min$, $\zeta cont$, $\zeta real$ et $\zeta moy$ calculées. Sur chacune des paraboles, on a mis en évidence par des tirets épais les portions respectives C1, C2, C3 et C4 de ces paraboles correspondant à leur plage de débit d'application.

Ainsi, pour un débit mesuré Qmes donné porté en abscisse de ce graphique, on pourrait obtenir en ordonnées une valeur de la perte de charge $\Delta P'$ entre la bouche la plus défavorisée 8' et le ventilateur 2 à l'intersection de la valeur du débit mesuré et de la portion de courbe C1, C2, C3 ou C4 correspondant à la plage de débit dans laquelle se situe le débit mesuré.

Cependant, une telle exploitation de ce graphique se heurte au problème de la discontinuité de la valeur de la perte de charge obtenue de part et d'autre de chaque borne de plage de débit.

Pour respecter la continuité du phénomène physique, on a déterminé une courbe C, représentée en trait plein épais sur la figure 2, qui permet un raccordement continu de portions de courbe parallèles aux portions de courbe C1 à C4. Ainsi, à l'abscisse correspondant au débit mesuré au collecteur 5 de l'installation, la courbe C fait correspondre une valeur de la perte de charge $\Delta P'$ entre la bouche la plus défavorisée 8' et le ventilateur 2.

De manière analytique, en notant $\Delta P(\zeta, Q)$ la perte de charge obtenue à l'intersection d'une courbe Ci de coefficient de perte de charge $\zeta$ et d'un débit Q, la perte de charge $\Delta P'$ pour un débit mesuré Qmes compris entre les bornes de débit Q1/3 et Q2/3 s'exprime :

$$\Delta P'(Qmes) = \Delta P(\zeta real, Qmes) - \Delta P(\zeta real, Q1/3) + \Delta P(\zeta cont, Q1/3)$$
$$- \Delta P(\zeta cont, Qmin) + \Delta P(\zeta min, Qmin)$$

Une fois que la perte de charge $\Delta P'$ entre la bouche la plus défavorisée et le ventilateur a été obtenue, il est immédiat d'obtenir la pression calculée Pbouche régnant à l'intérieur du conduit de raccordement 9' au droit de la bouche la plus défavorisée 8' en retranchant cette perte de charge $\Delta P'$ à la pression Pv générée par le ventilateur 2 en amont de celui-ci.

On régule alors la vitesse de rotation du ventilateur en fonction d'un écart entre la pression calculée Pbouche et une pression de consigne Pc déterminée pour permettre au moins le débit minimum d'extraction exigé au travers de la bouche 8'. La pression de consigne Pc est ainsi calculée à partir de la différence de pression nécessaire aux bornes de la bouche 8' pour assurer ce débit minimum et de la pression régnant à l'intérieur du logement 7' auquel la bouche la plus défavorisée 8' est reliée.

La régulation de la vitesse de rotation du ventilateur s'effectue alors en incrémentant cette vitesse de rotation si la pression calculée Pbouche est inférieure à la pression de consigne Pc et en décrémentant cette vitesse de rotation dans le cas contraire.

De manière préférentielle, afin que la régulation n'oscille pas en permanence autour de la pression de consigne, on détermine une bande morte autour de cette pression de consigne, en encadrant celle-ci par deux limites de pression. Lorsque la pression calculée Pbouche se situe à l'intérieur de ces deux limites, la vitesse de rotation du ventilateur est maintenue constante. Bien entendu, les deux limites de pression ne sont pas nécessairement symétriques par rapport à la pression de consigne calculée. Par exemple, afin de garantir le débit minimum d'extraction malgré les constantes de temps imposées par le volume des conduites, la bande morte pourra être tout entière située au-dessus de la pression de consigne.

Bien entendu, cette description est donnée à titre d'exemple illustratif uniquement et l'homme du métier pourra y apporter de nombreuses modifications sans sortir de la portée de l'invention telle que définie dans les revendications annexées, comme par exemple utiliser des méthodes équivalentes aux méthodes proposées pour déterminer le débit mesuré ou la pression en amont du ventilateur.

## Revendications

1. Procédé de régulation de la vitesse de rotation d'un ventilateur (2) d'extraction d'air vicié d'une installation (1) comportant une pluralité de bouches d'extraction (8) reliées à un collecteur (5) commun par des conduites (6,9), dans lequel :

    - dans une étape initiale,

        - on détermine, à partir de données représentatives de l'installation, un premier débit de l'installation et on calcule, à ce premier débit, une perte de charge, dite perte de charge théorique, entre chaque bouche d'extraction et le ventilateur,
        - on détermine une bouche d'extraction, dite bouche la plus défavorisée (8'), présentant la perte de charge théorique maximum, et
        - on calcule un coefficient de perte de charge ($\zeta$) de l'installation entre la bouche la plus défavorisée et le ventilateur à partir des données de section (S1, S2) du collecteur,
        - on détermine pour au moins deux autres débits étagés dans une plage de débits de l'installation, un coefficient de perte de charge entre ladite bouche la plus défavorisée et le ventilateur,

    - dans une deuxième étape, à chaque instant,

        - on estime un débit mesuré (Qmes) de l'installation,
        - on calcule une pression, dite pression calculée (Pbouche), au droit de la bouche la plus défavorisée à partir du débit mesuré et des coefficients de perte de charge de l'installation, et
        - on régule la vitesse de rotation du ventilateur en fonction d'un écart entre la pression calculée et une pression de consigne (Pc).

2. Procédé de régulation selon la revendication 1, **caractérisé en ce que** le premier débit est un débit maximum foisonné (QMaxF) de l'installation obtenu à partir de la structure de celle-ci, du nombre et des caractéristiques des bouches d'extraction (8) installées.

3. Procédé de régulation selon l'une quelconque des revendications 1 ou 2, **caractérisé en ce qu'**un deuxième débit est un débit minimum (Qmin) de l'installation.

4. Procédé selon la revendication 3, **caractérisé en ce qu'**un troisième débit est un débit médian de l'installation, obtenu à partir de la somme des débits médians traversant les bouches (8), chaque débit médian étant une moyenne du débit individuel de chaque bouche dans les conditions du premier débit et du débit individuel de chaque bouche dans les conditions du deuxième débit.

5. Procédé selon l'une quelconque des revendications 1 à 4, **caractérisé en ce que**, dans une installation (1) comportant plusieurs conduits principaux, dits colonnes (6,6') connectés au ventilateur, on utilise un quatrième débit, dit débit contraignant (Qcont), de l'installation, obtenu à partir de la somme des débits minimaux de toutes les colonnes (6) de l'installation à l'exception de la colonne (6') dans laquelle est située la bouche la plus défavorisée

(8'), et du débit maximum foisonné de la colonne (6') dans laquelle est située la bouche la plus défavorisée.

6.  Procédé selon l'une quelconque des revendications 1 à 5, **caractérisé en ce que** pour chaque débit (QmaxF, Qmin, Qmed, Qcont), on calcule un coefficient ζ de perte de charge de l'installation à partir de l'équation :

$$\zeta = \frac{2\Delta P}{\rho\left(\frac{Q}{S}\right)^2}$$

où :

- ΔP est la perte de charge entre la bouche la plus défavorisée (8') et le ventilateur (2), pour le débit considéré,
- ρ est une valeur normalisée de la masse volumique de l'air,
- Q est le débit considéré,
- S est la section (S1, S2) équivalente d'un collecteur (5) immédiatement en amont du ventilateur.

7.  Procédé selon la revendication 6, **caractérisé en ce qu'**on détermine un coefficient de perte de charge supplémentaire, dit coefficient de perte de charge moyen (ζmoy), obtenu à partir d'une moyenne des coefficients de perte de charge (ζMax, ζmin, ζmed) calculés à partir des trois premiers débits.

8.  Procédé selon la revendication 7, **caractérisé en ce qu'**on détermine un coefficient de perte de charge supplémentaire, dit coefficient de perte de charge réaliste (ζreal), obtenu à partir d'une moyenne du coefficient de perte de charge moyen (ζmoy) et du coefficient de perte de charge contraignant (ζcont).

9.  Procédé selon l'une quelconque des revendications 1 à 8, **caractérisé en ce que**, à chaque instant, on estime un débit actuel de l'installation, dit débit mesuré (Qmes), à partir de la vitesse de rotation du ventilateur et de la mesure d'une pression (Pv) générée par le ventilateur.

10. Procédé selon l'une quelconque des revendications 1 à 8, **caractérisé en ce que**, à chaque instant, on estime un débit actuel de l'installation, dit débit mesuré (Qmes), à partir de la vitesse du flux d'air en amont du ventilateur et de la section (S1, S2) du collecteur.

11. Procédé selon l'une quelconque des revendications 9 ou 10, **caractérisé en ce qu'**on détermine, pour le débit mesuré (Qmes), une perte de charge (ΔP') entre le ventilateur (2) et la bouche la plus défavorisée (8') à partir des coefficients de perte de charge (ζmin, ζcont, ζreal, ζmoy) préalablement calculés.

12. Procédé selon la revendication 11, **caractérisé en ce qu'**on définit une pluralité de plages de débit, on affecte à chaque plage de débit un coefficient de perte de charge adapté à cette plage de débit et on calcule la perte de charge (ΔP') entre le ventilateur et la bouche la plus défavorisée en fonction des plages de débit comprises entre le débit minimum (Qmin) et le débit mesuré (Qmes).

13. Procédé selon l'une quelconque des revendications 1 à 12, **caractérisé en ce qu'**on détermine la pression calculée (Pbouche) à partir de la perte de charge (ΔP') entre le ventilateur (2) et la bouche la plus défavorisée (8'), on compare la pression calculée avec une pression de consigne (Pc) et on incrémente la vitesse de rotation du ventilateur si la pression calculée est inférieure à la pression de consigne ou on décrémente la vitesse de rotation du ventilateur si la pression calculée est supérieure à la pression de consigne.

14. Procédé selon la revendication 13, **caractérisé en ce que** la pression de consigne (Pc) est déterminée en fonction de la différence de pression minimum aux bornes de la bouche la plus défavorisée et de la dépression régnant dans un logement (7') desservi par la bouche la plus défavorisée (8').

15. Procédé selon l'une quelconque des revendications 13 ou 14, **caractérisé en ce qu'**on encadre la pression de consigne (Pc) par deux limites de pression et **en ce que** la vitesse de rotation du ventilateur reste inchangée à l'intérieur de ces limites.

**Patentansprüche**

1. Verfahren zum Regeln der Drehzahl eines Abluft-Abzugsgebläses (2) einer Anlage (1), die eine Vielzahl von Abzugsöffnungen (8) umfasst, welche über Leitungen (6, 9) mit einem gemeinsamen Kollektor (5) verbunden sind, wobei:

   - in einem anfänglichen Schritt

      -- auf Grundlage von Daten, die für die Anlage repräsentativ sind, ein erster Durchsatz der Anlage bestimmt wird, und ein als theoretischer Druckverlust bezeichneter Druckverlust bei diesem ersten Durchsatz zwischen jeder Abzugsöffnung und dem Gebläse berechnet wird,
      -- eine als am stärksten benachteiligte Öffnung (8') bezeichnete Abzugsöffnung bestimmt wird, die den maximalen theoretischen Druckverlust aufweist, und
      -- auf Grundlage der Querschnittsdaten (S1, S2) des Kollektors ein Druckverlustkoeffizient (ζ) der Anlage zwischen der am stärksten benachteiligten Öffnung und dem Gebläse berechnet wird,
      -- für mindestens zwei weitere abgestufte Durchsätze in einem Durchsatzbereich der Anlage ein Druckverlustkoeffizient zwischen der am stärksten benachteiligten Öffnung und dem Gebläse bestimmt wird,

   - in einem zweiten Schritt zu jedem Zeitpunkt

      -- ein gemessener Durchsatz (Qmes) der Anlage geschätzt wird,
      -- ein als berechneter Druck (Pbouche) bezeichneter Druck an der am stärksten benachteiligten Öffnung auf Grundlage des gemessenen Durchsatzes und der Druckverlustkoeffizienten der Anlage berechnet wird, und

   - die Drehzahl des Gebläses abhängig von einer Abweichung zwischen dem berechneten Druck und einem Solldruck (Pc) geregelt wird.

2. Regelungsverfahren nach Anspruch 1, **dadurch gekennzeichnet, dass** der erste Durchsatz ein vorherrschender maximaler Durchsatz (QMaxF) der Anlage ist, der auf Grundlage der Struktur derselben, der Anzahl und der Charakteristiken der installierten Abzugsöffnungen (8) erhalten wird.

3. Regelungsverfahren nach einem der Ansprüche 1 oder 2, **dadurch gekennzeichnet, dass** ein zweiter Durchsatz ein minimaler Durchsatz (Qmin) der Anlage ist.

4. Verfahren nach Anspruch 3, **dadurch gekennzeichnet, dass** ein dritter Durchsatz ein mittlerer Durchsatz der Anlage ist, der auf Grundlage der Summe der mittleren Durchsätze erhalten wird, die die Öffnungen (8) durchströmen, wobei jeder mittlere Durchsatz ein Durchschnitt des einzelnen Durchsatzes jeder Öffnung unter den Bedingungen des ersten Durchsatzes, und des einzelnen Durchsatzes jeder Öffnung unter den Bedingungen des zweiten Durchsatzes ist.

5. Verfahren nach einem der Ansprüche 1 bis 4, **dadurch gekennzeichnet, dass** in einer Anlage (1), die mehrere als Säulen (6, 6') bezeichnete, mit dem Gebläse verbundene Hauptleitungen umfasst, ein als schlechter Durchsatz (Qcont) bezeichneter vierter Durchsatz der Anlage verwendet wird, der auf Grundlage der Summe der minimalen Durchsätze aller der Säulen (6) der Anlage mit Ausnahme der Säule (6'), in der sich die am stärksten benachteiligte (8') Öffnung befindet, und des vorherrschenden maximalen Durchsatzes der Säule (6') erhalten wird, in der sich die am stärksten benachteiligte Öffnung befindet.

6. Verfahren nach einem der Ansprüche 1 bis 5, **dadurch gekennzeichnet, dass** für jeden Durchsatz (QmaxF, Qmin, Qmed, Qcont) ein Druckverlustkoeffizient ζ der Anlage auf Grundlage der Gleichung:

$$\zeta = \frac{2\Delta P}{\rho\left(\frac{Q}{S}\right)^2}$$

berechnet wird, wobei:

- $\Delta P$ der Druckverlust zwischen der am stärksten benachteiligten Öffnung (8') und dem Gebläse (2) bei dem betreffenden Durchsatz ist,
- $\rho$ ein normalisierter Wert der Dichte der Luft ist,
- Q der betreffende Durchsatz ist,
- S der äquivalente Querschnitt (S1, S2) eines Kollektors (5) unmittelbar stromaufwärts des Gebläses ist.

7. Verfahren nach Anspruch 6, **dadurch gekennzeichnet, dass** ein zusätzlicher, als durchschnittlicher Druckverlustkoeffizient ($\zeta$moy) bezeichneter Druckverlustkoeffizient bestimmt wird, der auf Grundlage eines Durchschnitts der auf Grundlage der drei ersten Durchsätze berechneten Druckverlustkoeffizienten ($\zeta$Max, $\zeta$min, $\zeta$med) erhalten wird.

8. Verfahren nach Anspruch 7, **dadurch gekennzeichnet, dass** ein zusätzlicher, als realistischer Druckverlustkoeffizient ($\zeta$real) bezeichneter Druckverlustkoeffizient bestimmt wird, der auf Grundlage eines Durchschnitts des durchschnittlichen Druckverlustkoeffizienten ($\zeta$moy) und des schlechten Druckverlustkoeffizienten ($\zeta$cont) erhalten wird.

9. Verfahren nach einem der Ansprüche 1 bis 8, **dadurch gekennzeichnet, dass** zu jedem Zeitpunkt ein als gemessener Durchsatz (Qmes) bezeichneter aktueller Durchsatz der Anlage auf Grundlage der Drehzahl des Gebläses und der Messung eines vom Gebläse erzeugten Drucks (Pv) geschätzt wird.

10. Verfahren nach einem der Ansprüche 1 bis 8, **dadurch gekennzeichnet, dass** zu jedem Zeitpunkt ein als gemessener Durchsatz (Qmes) bezeichneter aktueller Durchsatz der Anlage auf Grundlage der Geschwindigkeit des Luftstroms stromaufwärts des Gebläses und des Querschnitts (S1, S2) des Kollektors geschätzt wird.

11. Verfahren nach einem der Ansprüche 9 oder 10, **dadurch gekennzeichnet, dass** für den gemessenen Durchsatz (Qmes) ein Druckverlust ($\Delta$P') zwischen dem Gebläse (2) und der am stärksten benachteiligten Öffnung (8') auf Grundlage der zuvor berechneten Druckverlustkoeffizienten ($\zeta$min, $\zeta$cont, $\zeta$real, $\zeta$moy) bestimmt wird.

12. Verfahren nach Anspruch 11, **dadurch gekennzeichnet, dass** eine Vielzahl von Durchsatzbereichen definiert wird, jedem Durchsatzbereich ein für diesen Durchsatzbereich angepasster Druckverlustkoeffizient zugewiesen wird, und der Druckverlust ($\Delta$P') zwischen dem Gebläse und der am stärksten benachteiligten Öffnung abhängig von den Durchsatzbereichen berechnet wird, die zwischen dem minimalen Durchsatz (Qmin) und dem gemessenen Durchsatz (Qmes) umfasst sind.

13. Verfahren nach einem der Ansprüche 1 bis 12, **dadurch gekennzeichnet, dass** der berechnete Druck (Pbouche) auf Grundlage des Druckverlusts ($\Delta$P')zwischen dem Gebläse (2) und der am stärksten benachteiligten Öffnung (8') bestimmt wird, der berechnete Druck mit einem Solldruck (Pc) verglichen wird, und die Drehzahl des Gebläses inkrementiert wird, wenn der berechnete Druck kleiner ist als der Solldruck, oder die Drehzahl des Gebläses dekrementiert wird, wenn der berechnete Druck größer ist als der Solldruck.

14. Verfahren nach Anspruch 13, **dadurch gekennzeichnet, dass** der Solldruck (Pc) abhängig von der minimalen Druckdifferenz an den Anschlüssen der am stärksten benachteiligten Öffnung und dem Unterdruck bestimmt wird, der in einem Raum (7') herrscht, welcher von der am stärksten benachteiligten Öffnung (8') bedient wird.

15. Verfahren nach einem der Ansprüche 13 oder 14, **dadurch gekennzeichnet, dass** der Solldruck (Pc) mit zwei Druckgrenzen eingerahmt wird, und dadurch, dass die Drehzahl des Gebläses innerhalb dieser Grenzen unverändert bleibt.

**Claims**

1. Method for regulating the rotation speed of an exhaust air extraction ventilator (2) of an installation (1) comprising a plurality of extract units (8) connected to a common collector (5) through conduits (6, 9), wherein:

   - in an initial step,

     -- from data representative of the installation, a first flow of the installation is determined, and at this first flow, a load loss, called theoretical load loss, is calculated, between each extract unit and the ventilator,
     -- an extract unit, called the most disadvantaged unit (8'), is determined, having the maximum theoretical load loss, and

-- a load loss coefficient (ζ) of the installation between the most disadvantaged unit and the ventilator from cross-sectional data (S1, S2) of the collector,
-- a load loss coefficient between said the most disadvantaged unit and the ventilator is determined for at least two other staged flows in a range of flows of the installation,

- in a second step, at each instant,

-- a measured flow (Qmes) of the installation is estimated,
-- a pressure, called calculated pressure (Pbouche) is calculated, to the right of the most disadvantaged unit from the measured flow and the load loss coefficients of the installation, and
-- the rotation speed of the ventilator is regulated according to a difference between the calculated pressure and a setpoint pressure (Pc).

2. Regulation method according to claim 1, **characterised in that** the first flow is a maximum proliferated flow (QMaxF) of the installation obtained from the structure of it, of the number and of the characteristics of the installed extract units (8).

3. Regulation method according to any one of claims 1 or 2, **characterised in that** a second flow is a minimum flow (Qmin) of the installation.

4. Method according to claim 3, **characterised in that** a third flow is a median flow of the installation, obtained from the sum of the median flows passing through the units (8), each median flow being an average of the individual flow of each unit under the conditions of the first flow and of the individual flow of each unit under the conditions of the second flow.

5. Method according to any one of claims 1 to 4, **characterised in that**, in an installation (1) comprising several main conduits, called columns (6, 6') connected to the ventilator, a fourth flow, called constraining flow (Qcont) is used, of the installation, obtained from the sum of the minimum flows of all the columns (6) of the installation, except for the column (6') wherein is located the most disadvantaged unit (8'), and of the maximum proliferated flow of the column (6'), wherein is located the most disadvantaged unit.

6. Method according to any one of claims 1 to 5, **characterised in that** for each flow (QmaxF, Qmin, Qmed, Qcont), a load loss coefficient ζ of the installation is calculated from the equation:

$$\zeta = \frac{2\Delta P}{\rho\left(\frac{Q}{S}\right)^2}$$

where:

- ΔP is the load loss between the most disadvantaged unit (8') and the ventilator (2) for the flow in question,
- ρ is a standardised value of the density of air,
- Q is the flow in question,
- S is the equivalent cross-section (S1, S2) of a collector (5) immediately upstream of the ventilator.

7. Method according to claim 6, **characterised in that** an additional load loss coefficient, called average load loss coefficient (ζmoy) is calculated, from an average of the load loss coefficients (ζmax, ζmin, ζmed), calculated from the first three flows.

8. Method according to claim 7, **characterised in that** an additional load loss coefficient, called real load loss coefficient (ζreal) is determined, obtained from an average of the average load loss coefficient (ζmoy) and of the constraining load loss coefficient (ζcont).

9. Method according to any one of claims 1 to 8, **characterised in that**, at each instant, a current flow of the installation, called measured flow (Qmes) is estimated, from the rotation speed of the ventilator and the measurement of a pressure (Pv) generated by the ventilator.

10. Method according to any one of claims 1 to 8, **characterised in that**, at each instant, a current flow of the installation, called measured flow (Qmes) is estimated, from the speed of the air flow upstream of the ventilator and of the cross-section (S1, S2) of the collector.

11. Method according to any one of claims 9 or 10, **characterised in that**, for the measured flow (Qmes), a load loss (ΔP') is determined between the ventilator (2) and the most disadvantaged unit (8') from the load loss coefficients (ζmin, ζcont, ζreal, ζmoy) calculated beforehand.

12. Method according to claim 11, **characterised in that** a plurality of flow ranges is defined, at each flow range, a load loss coefficient is assigned, which is adapted to this flow range and the load loss (ΔP') is calculated between the ventilator and the most disadvantaged unit according to the flow ranges between the minimum flow (Qmin) and the measured flow (Qmes).

13. Method according to any one of claims 1 to 12, **characterised in that** the calculated pressure (Pbouche) is determined from the load loss (ΔP') between the ventilator (2) and the most disadvantaged unit (8'), the calculated pressure is compared with a setpoint pressure (Pc) and the rotation speed of the ventilator is incremented, if the calculated pressure is less than the setpoint pressure, or the rotation speed of the ventilator is decremented, if the calculated pressure is greater than the setpoint pressure.

14. Method according to claim 13, **characterised in that** the setpoint pressure (Pc) is determined according to the minimum pressure difference at the terminals of the most disadvantaged unit and the depression present in a housing (7') served by the most disadvantaged unit (8').

15. Method according to any one of claims 13 or 14, **characterised in that** the setpoint pressure (Pc) is regulated by two pressure limits and **in that** the rotation speed of the ventilator remains unchanged within these limits.

FIGURE 1

EP 3 348 922 B1

FIGURE 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2513359

- FR 2969255